# EUROPEAN PATENT SPECIFICATION

(11) **EP 1 993 834 B1**
(45) Date of publication and mention of the grant of the patent: **01.12.2010**
(21) Application number: 07713454.2
(22) Date of filing: 15.02.2007
(51) Int. Cl.: B32B 27/18, B32B 27/32, B65D 65/40

(54) **MULTILAYER PLASTIC FILM**
MEHRSCHICHTIGE KUNSTSTOFFFOLIE
FILM PLASTIQUE MULTICOUCHE

(30) Priority: 20.02.2006 EP 06425103
(43) Date of publication of application: 26.11.2008
(73) Proprietor: Syrom 90 S.P.A., 50059 Vinci, Firence (IT)
(72) Inventor: NASSI, Aldo, I-50059 Sovigliana, Vinci, Firenze (IT); LEPORI, Alessandro, I-50053 Pontorme, Empoli, Firenze (IT)
(74) Representative: Mannucci, Michele
(86) International application number: PCT/IT2007/000100
(87) International publication number: WO 2007/096925

(56) References cited:
- WO-A-02/081205
- US-A1- 2003 008 153
- US-A1- 2003 211 350

## Description

### Technical field

The present invention relates to a multilayer plastic film for packaging or other applications. More specifically, the invention relates to a plastic film for the packaging of food products.

Moreover, the invention relates to a method for producing a multilayer film of the aforesaid type.

### State of the art

During design of a film suitable to create flexible packaging for a food product, design difficulties are encountered due to the fact that the properties required to guarantee protection of the food are never present in a single packaging material.

This results in the need to use a combination of several materials in order to compensate for the shortages of one material with the properties of the others.

A biaxially oriented polypropylene film, for example, offers excellent protection from water vapor, but is not heat-sealable and therefore does not guarantee the seal of packages. This fact does not allow exploitation of the aforesaid barrier property with regard to water vapor.

Therefore, multiple structures are used, in which the biaxially oriented polypropylene film is made heat-sealable with the addition of one or more layers of heat-sealable material.

These layers can be added with various technologies, such as lacquering and co-extrusion.

A further difficulty is represented by the fact that these types of plastic film must also be "machinable", "machinability" being intended as their capacity to be processed in machinery for packaging products. In fact, these films are very thin, in the range of a few micrometers, and can be easily damaged or torn during use on said machinery.

Friction and mechanical resistance of the film are, moreover, important parameters in order to determine packaging speed, which has a considerably influence on the final cost of this type of product.

The need for a film of this type to be machinable makes it necessary to add specific materials or agents to the composition of the surface layers of the multilayer plastic film. Therefore, countless types of film containing various additives, such as anti-friction and lubricating agents, have been developed.

To increase the "machinability" of the plastic film the use of lubricating agents ("slip additives") is known. These can be, for example, esters of aliphatic acids amides of aliphatic acids, waxes, organosiloxanes with viscosity of between 0,000350 and 2,5 m²/s (350 and 2500000 centistokes, cSt)) (fluid silicones) - which form a coating of lubricant on the outer surface of the film, to lower the coefficient of friction and increase the slip properties of the film.

Generally, these substances are mixed with the polymer, which forms one of the layers of the multilayer film, in a quantity in weight of up to 2%.

The principal disadvantage of the use of the aforesaid anti-friction agents is represented by the fact that some operations required during processing of the plastic packaging film, such as printing and metallization, can become more problematic.

It Is particularly difficult to apply metallic coating and protective layers, which provide an optimal barrier to light, oxygen and humidity and which are usually advantageously produced with very thin layers of aluminum applied with the vacuum evaporation technique to said film.

The presence of the aforesaid substances prevents correct deposition of the coating layers, in particular metal deposition, and can cause unacceptable defects in the finished product, such as whitish marks, delamination of the coating and loss of the barrier values provided by this coating.

Another disadvantage in the use of the aforesaid lubricating agents on plastic films is represented by the fact that they can reduce the optical properties of the finished product, such as luster, transparency and luminosity.

A further disadvantage is represented by the fact that it can be difficult to precisely control the degree of lubrication during processing, as distribution on the surface of the film is slow and uneven, usually creating islands or marks of lubricant on this surface.

Countless types of plastic films, also metallized, have been developed in the past, comprising different combinations and mixtures of anti-friction or lubricating agents.

The patents: US-A-5.840.419; US-A-5.840.419; US-A-6,291,063; US-B-6,902,822; US-A-4,692,379; US-A-5,137,955; US-A-4,966,933; US-A-6.623.866 describe multilayer structures of plastic films, also metallized, in which to obtain low coefficient of friction values, and consequently improve the "machinability" of the film, silicone products are also used, but with viscosity of between 0,000350 and 2,5 m²/s (350 and 2500000 cSt).

US-A-2003/0008153 discloses a sealable film with siloxane additives. The film disclosed in this prior art document includes a base layer, two intermediate layers, one on each surface of the base layer, and two opposite skin layers. In some embodiments disclosed therein, one or both transition layers include a silicone additive. The range of viscosity of the silicone additive disclosed in this prior art document is between 0,001 and 50 m²/s (1000 and 50.000.000 cSt). In some embodiments the silicone additive is a polydialkylsiloxane with a viscosity between about 10 and 50 m²/s (10.000.000 and 50.000.000 cSt). In some embodiments one of the free surfaces of the skin layers is vacuum-metallized. A particular relationship between vacuum metallization and viscosity of the silicone additive is not disclosed.

US-A-2003/0211350 and WO-A-02/081205 disclose a multilayer heat sealable polyolefin films comprising a skin layer and a transition layer. Low viscosity silicone additives with a viscosity ranging between 0,01 and 2 m²/s (10,000 and 2.000.000 cSt) are contemplated. A special function or effect of said additives is not specifically disclosed.

### Objects and summary of the invention

An object of one embodiment of the present invention is to provide a multilayer plastic film with improved "machinability" properties.

The object of a particular embodiment of the invention is to produce a metallized multilayer plastic film with improved "machinability" properties.

A further object is the embodiment of a method to metallize a multilayer plastic film in a simple and inexpensive way.

According to one aspect, the invention concerns a multilayer film according to claim 1.

According to a further aspect, the invention concerns a method of producing a plastic multilayer metallized film according to claim 17.

Further features and embodiments of the invention are set forth in the dependent claims.

The subject of the present invention is a multilayer polymer film for flexible packaging, comprising at least a base layer having a first side and a second side and composed at least in part of isotactic polypropylene; a first coating layer or skin layer associated with the first side of the base layer, a second coating layer or skin layer associated with the second side of the base layer; wherein a silicone polymer with very high viscosity utilized as lubricant agent is added to at least one of the coating layers. Preferably, the silicon polymer is applied in the thickness of the first skin layer or coating layer, such that it can migrate during time on the external surface of the multilayer structure. A metallization protective layer is applied, preferably by vacuum deposition, on the external surface of the first protective layer.

The invention is based on the unexpected recognition that the silicon polymer, which is used as a lubricant agent, does not prevent or jeopardize or obstruct the vacuum deposition of the metallization layer. Nor does it damage the metallization layer once it has been applied. The silicon polymer bleeds on the outer surface of the second coating or skin layer. Once the film is rolled in a reel, even if the silicon polymer is applied only In the mixture forming the second coating layer it will bleed on the surface thereof and get in contact with the outer surface of the first coating or skin layer. This notwithstanding, it has been surprisingly noted that the subsequent metallization of the outer surface of said first coating layer is still possible and not prejudiced. Once re-wound on a roll, the metallized surface gets in contact with the outer surface of the second skin layer, thus receiving a part of the bleeding silicon polymer.

The result of this is a very efficient lubrication effect of the film.

Silicon polymer as a lubricating additive in a multilayer plastic metallized film is known from US-A-2003/008153. However, according this known technology, the silicon polymer is added in an intermediate layer rather than in the skin layer of the structure. This was considered essential to avoid a direct contact between the outer surface which had to be metallized with the silicon-added layer. The result is a much less efficient lubrication, due to the barrier effect of the skin layer against bleeding of the silicon polymer.

Within the scope of the present invention and of the appended claims "associated coating layer" must be understood as a layer in which further intermediate layers can be included or, optionally superimposed, such as an intermediate layer between the base layer and the skin layer(s). In conclusion, the film can be composed of a plurality of layers superimposed on one another.

In a particularly advantageous embodiment of the invention, the silicone polymer is of the organosiloxane type and has a high weighted mean molecular weight (preferably equal to or greater than 300000 Mw) with a discosity of over 15 m²/s (15000000 centistokes).

The quantity of silicone polymer utilized is preferably and advantageously between 0.5 and 2.0% in weight with respect to the first and/or to the second coating layer to which it is added.

According to a preferred embodiment of the invention, the protective layer has a thickness of approximately 100-300 Ångström (Å) and is advantageously and preferably formed by aluminum deposited with the vacuum process. However, protective layers could also be produced with lacquers or inks in place of the metallic layer or yet again with layers of lacquers or inks over this metallic layer.

According to a particularly advantageous embodiment of the invention, in the second coating layer to which the silicone polymer is added, it is unnecessary to utilize further additives or lubricating agents which could reduce receptivity to the optional protective layer.

However, it would also be possible to utilize minimum quantities of at least one further lubricating agent, in particular and preferably in quantities of no more than 500 parts per million (ppm) in weight with respect to the coating layer to which it is added.

In fact, it has been found that the aforesaid film has a high coefficient of friction, high receptivity to lacquer or ink type protective layers and excellent receptivity also to metal deposition, in particular to aluminum deposited using the vacuum process.

In other words, the use of silicone polymers with very high viscosity as lubricating agents does not cause any defects occurring in films containing the lubricating agents cited above and, in particular, aluminum adhesion is excellent, the barrier properties against both oxygen and water vapor provided on the structure by metallization are not altered and there are no marks on the metallized surface.

In conclusion, to produce a metallized multilayer film according to the invention it is unnecessary to utilize further lubricating agents, which can have a negative effect on adhesion of the metal or on the optical properties of the film.

Therefore, it would also be possible to utilize other types of additives to further improve the production process of the film increasing the production speed, as will be described in greater detail hereunder.

According to a further aspect, the present invention provides for a method for producing a multilayer plastic film comprising at least the following steps: extruding the film forming a multilayer structure comprising at least a base layer, a first coating or skin layer associated with a first side of said base layer and a second coating or skin layer associated with a second side of said base layer; metallizing the outer surface of the first coating layer; winding the film thus obtained in a roll; wherein a silicone polymer with very high viscosity is utilized as lubricating agent associated with second coating layers.

The metallized layer is preferably an aluminum layer applied by vacuum deposition. It would also be possible to provide a further protective layer e.g. formed with lacquers or inks, optionally applied to the metallized layer.

In particular, the step to apply the silicone product with very high viscosity can advantageously be carried out by adding it to the mix which is to form said second coating layer in the extruders of the machine for producing the film.

In the roll, the silicone product applied to one side of the film is transferred through contact to the opposite side with respect to the base layer. This transfer takes place in a few hours with substantially even distribution.

A particularly advantageous embodiment of the invention provides for a first step in which the polypropylene film is extruded and stretched to obtain a biaxially oriented film.

Moreover, further steps are advantageously carried out to increase the surface energy of the film, such as plasma, flame or corona treatments in order to increase the receptivity to deposition of the coating layers, in particular to metal deposition; it is clear that, in this case, deposition of the coating layer takes place on the side on which the surface treatment was performed.

In other words, the treatment to increase the surface energy is performed on the outer surface of the film devoid of silicone polymer, before winding the extruded film in a roll, and therefore before the silicone polymer applied to the other side is distributed on said outer surface.

The film thus produced can be cut and closed by sealing in order to form a package, according to substantially known methods.

The principal advantage of the present invention is represented by the fact that the quality of the finished product is considerably improved. In fact, resistance to scratching and wear of the film thus produced is increased. The appearance of the finished product Is also greatly improved, as the optical properties of the finished product, such as luster and brightness, are preserved.

Moreover, in the case of metallized film, deposition of the protective layer, in particular metal deposition, is high quality and even.

Another advantage is represented by the fact that both costs and production times are considerably reduced, increasing the productivity of the production line.

Moreover, the production process of the film is easier to control, in particular it is easier to control the degree of lubrication of the film, as the silicone product is distributed more homogenously and evenly on the outer surface of the film with respect to the known lubricating agents already mentioned above.

Another advantage is represented by the fact that said film preserves the high coefficient of friction and is also slippery on the optional protective layer, in particular metallic, thereby preventing the coating from sticking to the jaws of the packaging machine during subsequent processing operations. The film thus obtained is therefore also suitable to be used optimally in lamination with other media or different layers to form plastic films with more evolved properties.

A further advantage is represented by the fact that the metallized film according to the invention can be produced with metallization machines of the conventional type.

### Brief description of the drawings

The present invention can be better understood and its numerous objects and advantages will be apparent to those skilled in the art with reference to the accompanying schematic drawings, which show a non-limiting practical embodiment of the finding.

In the drawing:
Figure 1 shows a schematic section of an exemplifying embodiment of a film according to the invention;
Figure 2 shows a schematic section of another embodiment;
Figure 3 shows a schematic section of a further embodiment.

### Detailed description of some embodiments of the invention

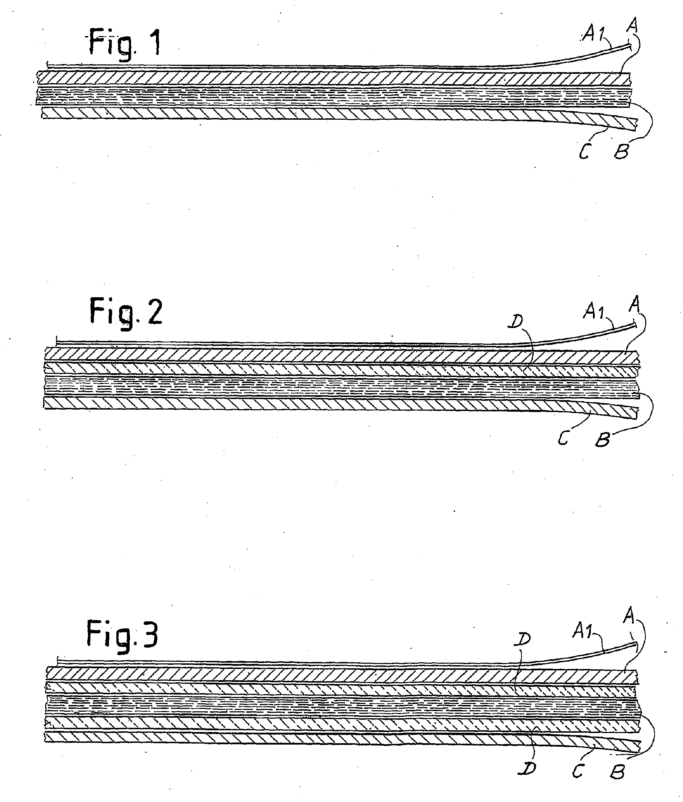

In the preferred embodiment of the present invention, the multilayer plastic film is a coextruded, biaxially oriented polypropylene based film with a base layer B and respective coating layers A and C on opposite sides of the base layer B, see Figure 1.

The base layer B is substantially composed of isotactic polypropylene obtained by coextrusion; in particular, the base layer B advantageously has a thickness of approximately 10 to 100 micrometers and can be composed of at least one of the following components or mixtures thereof:
- 100% isotactic polypropylene: or
- isotactic polypropylene mixed with isotactic polypropylene with high crystallinity; or
- isotactic polypropylene with a bimodal structure that can contain up to 1% of C₂; or
- a mixture of two isotactic polypropylenes of which one has an isotacticity index below or equal to 2%; or
- polypropylene with bimodal distribution of the molecular weights and containing up to a maximum of 1% of ethylene.

The coating layer A is composed of a polymer, such as the copolymer C₂-C₃, the copolymer C₃-C₄ or the terpolymer C₂-C₃-C₄, or yet again can be composed of a polypropylene or of a homopolymer grafted with maleic anhydride alone or in a mixture with another homopolymer polypropylene.

In conclusion, the coating layer A has no further additives or lubricating agents which could reduce the receptivity of this layer A to deposition of the metallic or other protective layer.

The coating layer C is advantageously composed of a polymer, such as a copolymer C₃-C₄ or a terpolymer C₂-C₃-C₄, and preferably has a thickness ranging from 0.5 to 3 micrometers.

This layer C can be used to close packages and in this case it is advantageously sealable.

In a particularly advantageous embodiment of the invention, a silicone polymer of the polyorganosiloxane type with very high viscosity is included in the layer C in quantities of between 0.5 and 2.0%; it would also be possible for the layer A to include the silicone polymer alternatively or simultaneously to the layer C.

The aforesaid silicone polymer advantageously and preferably has a viscosity greater than 15 m²/s (15,000,000 centstokes) and preferably a weighted mean molecular weight equal to or greater than 300000 (Mw).

The silicone polymer can be added directly to at least one outer surface of the film or can be included in layer C to be distributed on the respective outer side.

The film according to the invention has a dynamic Coefficient of Friction (COF) with values below 0.35; structures without lubricating silicone polymers in general have a dynamic Coefficient of Friction of over 0.6.

According to a particularly advantageous embodiment of the invention, the silicone polymer contained in the layer C is distributed on the layer A, this distribution advantageously taking place through contact during winding of the film into a roll in the production phase.

The layer A preferably has a thickness of approximately 0.5 to 2 micrometers, or even more preferably between approximately 0.6-0.8 micrometers, and can advantageously be metallized using a known vacuum metallization technique, without pre-treatment with plasma in-line with the metallization process.

In this way it is possible to produce optional protective layers A', in particular although not only metallization layers, with thickness having an optical density (OD) ranging from 1 to 3.

Nonetheless, the layer A can advantageously be treated with a corona, flame or plasma treatment to facilitate subsequent deposition of the protective layer A'.

It would also be possible for an antiblocking agent of, for example, the inorganic type, such as amorphous silica, calcium carbonate, magnesium silicate, aluminum silicate, or of the organic type, such as cross-linked polymethacrylate (i.e. EPOSTAR MA - Nippon Shokubai, Japan) or cross-linked polysiloxane (i.e. TOSPEARL - Toshiba Silicon Co., Japan) to be added to at least one of the coating layers A and/or C.

Moreover, products that further improve adhesion of the metal, in particular aluminum, or which improve the barrier performances, such as polyolefin copolymers grafted with maleic anhydride, terpene resins, hydrocarbon resins can be added to the layer A.

Other embodiments of the invention advantageously provide that at least one of the coating layers A or C can include further and different layers.

In particular, Figure 2 shows a joining layer D advantageously included between the coating layer A and the first side of the base layer B, so as to form a structure of the film of the type A-D-B-C. In this case the layer D is preferably composed of a polyolefin polymer grafted with maleic anhydride; the layer A can be composed of a copolymer of the ethylene vinyl alcohol (EVOH) type; the layers B and C can be composed according to the description above.

Very high viscosity silicon polymer is added to the layer C and the layer A can be metallized, all as described above.

Figure 3 shows a further embodiment of the invention in which intermediate or joining layers D are associated with both of the coating layers A and C and are in contact with the respective faces of the base layer B, so as to form a structure of the type A-D-B-D-C.

In any case cavitating agents, such as PBT, CaCO₃, EVOH or the like can be used, added to the base layer B and/or to the joining layer D. Moreover, the use of a cavitating agent with a density below 0.9 g/cm³ can be used, in order to give the finished product a matt white appearance.

The layer A and/or C can be treated before deposition of the silicone polymer with a corona treatment with total absence of O₂, but in the presence of mixtures of gas based on N₂ and CO₂, or with a mixed corona-flame system.

### Measurement method utilized to determine the properties of the multilayer films

Oxygen Transmission Rates (OTR): ASTM D 3985 (23°C; 0% r.h.)
Water Vapor Transmission Rates (WVTR): ASTM D 1249 (38°C; 90% r.h.)
Optical Density (O.D.): Macbeth instrument TD 931
Metal/Film Adhesion (Tape Test): AIMCAL TP 104-87
Seal resistance: 130°C; 103421 Pa; 1 s (Polikrimper/TX-Alipack heat-sealing machine)
Coefficient of Friction (COF): ASTM D 1894

### Example no.1

Two samples of film of the type A-B-C are prepared by coextrusion and bi-axial orientation in which:
- the coating layer A is composed for both samples of a copolymer C₃-C₄ (Clyrell RC1601 - Basell) with a thickness of approximately 0.6 micrometers and is subjected to flame treatment.
- the base layer B for both samples is of the polypropylene homopolymer type (Moplen HP522H - Basell) with a thickness of approximately 16 micrometers.
- the coating layer C is heat sealable and has a thickness of approximately 1 micrometer composed for one sample (film 1) of a terpolymer C₂-C₃-C₄ (Adsyl 5C39F Basell) and for the second sample (film 2) of a mixture composed for 98% of a terpolymer C₂-C₃-C₄ (Adsyl 5C39F Basell) and 2% of a masterbatch in turn composed of homopolymer PP 50% and silicone polymer with high molecular weight 50% (MB50-001 - Dow Corning).

The following results are observed on the films:

| | Film 1 | Film 2 |
|---|---|---|
| Seal resistance C/C | 1.5 - 2.5 N/cm | 1.5 - 2.5 N/cm |
| Dynamic COF A/A | 0.60 - 0.80 | 0.25 - 0.30 |
| Dynamic COF C/C | 0.60 - 0.70 | 0.20 - 0.30 |

### Example no.2

The films in example 1 (film 1 and film 2) are metallized applying a layer of aluminum coating (A') to the layer A.

The following results are observed after metallization:

| | Metallized Film 1 | Metallized Film 2 |
|---|---|---|
| Optical Density | 2.4 | 2.4 |
| Presence of marks | NO | NO |
| Aluminum/film adhesion | Excellent | Excellent |
| OTR | 15 - 20 cm³/m²/24h | 15 - 20 cm³/m²/24h |
| WVTR | 0.20 - 0.35 g/m²/24h | 0.20 - 0.35 g/m²/24h |
| Seal resistance C/C | 1.5 - 2.5 N/cm | 1.5 - 2.5 N/cm |
| Dynamic COF C/C | 0.60 - 0.70 | 0.20 - 0.30 |

### Example no.3:

The films in example 1 (film 1 and film 2) are treated with plasma on the layer A and then metallized applying an aluminum coating layer (A') to the layer A.

The following results are observed after metallization:

| | Metallized Film 1 | Metallized Film 2 |
|---|---|---|
| Optical density | 2.4 | 2.4 |
| Presence of marks | NO | NO |
| Aluminum/Film adhesion | Excellent | Excellent |
| OTR | 5 - 7 cm³/m²/24h | 5 - 7 cm³/m²/24h |
| WVTR | 0.06 - 0.08 g/m²/24h | 0.06 - 0.08 g/m²/24h |
| Seal resistance C/C | 1.5 - 2.5 N/cm | 1.5 - 2.5 N/cm |
| Dynamic COF C/C | 0.60 - 0.70 | 0.20 - 0.30 |

## Claims

1. A multilayer film for flexible packaging, comprising at least:
- a base layer (B) based on polypropylene having a first side and a second side;
- a first coating layer (A) associated with the first side of said base layer (B);
- a second coating layer (C) associated with the second side of said base layer (B), said second coating layer having a free external surface;
- a metallization protective layer (A');
wherein a silicone polymer with a viscosity greater than 15 m²/s (15.000.000 cSt) is added to said second coating layer (C) utilized as lubricant agent is added to; and said metallization protective layer (A') is provided on said first coating layer (A).

2. Multilayer film as claimed in claim 1, **characterized in that** said silicone polymer is of the organosiloxane type and has a high weighted mean molecular weight with a viscosity of over 15 m²/s (15.000.000 cSt).

3. Multilayer film as claimed in claim 1 or 2, **characterized in that** said silicone polymer has a weighted mean molecular weight greater than 300.000 (Mw).

4. Multilayer film as claimed in one or more of the previous claims, **characterized in that** said silicone polymer is the only lubricating agent or is combined with one or more further lubricating agents, in quantities of no more than 500 ppm.

5. Multilayer film as claimed in one or more of the previous claims, **characterized in that** said silicone polymer is in a quantity of between 0.5 and 2.0% in weight with respect to the weight of said first or second coating layer (A; C) to which it is added.

6. Multilayer film as claimed in one or more of the previous claims, **characterized in that** said metallization protective layer (A') is formed as a vacuum metallization layer, preferably having a thickness between 100-300 (Å) and preferably being an aluminum-based layer.

7. Multilayer film as claimed in one or more of the previous claims, **characterized in that** said metallization protective layer (A') has an optical density (OD) between 1 and 3.

8. Multilayer film as claimed in one or more of the previous claims, **characterized in that** the level of the dynamic coefficient of friction (COF) is less than or equal to 0.35.

9. Multilayer film as claimed in one or more of the previous claims, **characterized by** one or more of the following features: said first coating layer (A) has a thickness between 0.5 and 2 micrometers, preferably between 0.6 and 0.8 micrometers; said second coating layer (C) has a thickness between 0.5 and 3 micrometers and is preferably sealable; said base layer (B) of said film has a thickness between 10 and 100 micrometers.

10. Multilayer film as claimed in one or more of the previous claims, **characterized in that** said first and/or said second coating layer (A; C) is composed of at least one of the following polymers: a copolymer C₂-C₃, a copolymer C₃-C₄, a terpolymer C₂-C₃-C₄, an ethylene vinyl alcohol copolymer or combinations thereof.

11. Multilayer film as claimed in one or more of the previous claims, **characterized in that** an antiblocking agent, such as amorphous silica, calcium carbonate, magnesium silicate, aluminum silicate, or cross-linked polymethacrylate or cross-linked polysiloxane is added to at least one of said coating layers (A; C).

12. Multilayer film as claimed in one or more of the previous claims, **characterized in that** further products which improve adhesion of said metallization protective layer (A') or which improve the barrier performances thereof, such as polyolefin copolymers grafted with maleic anhydride, terpene resins, hydrocarbon resins, are added to said first and/or second coating layer (A; C), to which said silicone polymer is added.

13. Multilayer film as claimed in one or more of the previous claims, **characterized in that** said base layer (B) is composed of 100% isotactic polypropylene, isotactic polypropylene mixed with isotactic polypropylene with high crystallinity, isotactic polypropylene with a bimodal structure that can contain up to 1% of C₂, a mixture of two isotactic polypropylenes of which one has an isotacticity index below or equal to 2%, or a polypropylene with bimodal distribution of the molecular weights and containing up to a maximum of 1 % of ethylene.

14. Multilayer film as claimed in one or more of the previous claims, **characterized in that** it is composed of a structure A-B-C, or of a structure A-D-B-C, with an intermediate joining layer (D) between said first coating layer (A) and said base layer (B), or of a structure A-D-B-D-C, with a joining layer between the base layer and said first coating layer (A) and a joining layer (D) between said base layer (B) and said second coating layer (C), wherein if said joining layer (D) is present, said joining layer is preferably composed of a polyolefin copolymer grafted with maleic anhydride, and wherein cavitating agents such as PBT, CaCO₃, EVOH and the like, are added to said base layer (B) and/or to said joining layer (D) if present.

15. Multilayer film as claimed in one or more of the previous claims, **characterized in that** said first and/or second coating layer (A; C), to which said metallization protective layer (A') is applied, before deposition of said protective layer (A') has been treated with a treatment selected from the group including: a corona treatment, preferably in the total absence of O₂, and preferably in the presence of mixtures of gas based on N₂ and CO₂; and a mixed corona-flame system before deposition of said metallization protective layer (A').

16. Multilayer film as claimed in one or more of the previous claims, **characterized in that** said silicone polymer is provided in the thickness of said first and/or said second protective layer (A, C).

17. A method for producing a metallized multilayer plastic film according to one or more of the preceding claims, comprising the following steps:
- extruding the film to produce the multilayer structure comprising at least a base layer (B) based on polypropylene, a first coating layer (A) associated with a first side of said base layer (B) and a second coating layer (C) associated with a second side of said base layer (B), said first coating layer (A) forming a first external surface of said multilayer structure and said second coating layer (C) forming a second external surface of said multilayer structure;
- metallizing said first external surface of said multilayer structure forming a metallized protective layer (A');
- winding the film thus obtained in a roll;
wherein a silicone polymer with a viscosity greater than 15 m²/s (15.000.000 cSt) is utilized as lubricating agent associated with said second coating layer (C).

18. Method as claimed in claim 17, **characterized in that** said silicone polymer is applied in a polymeric plastic mass before extrusion.

19. Method as claimed in claim 17 or 18, **characterized in that** said silicone polymer is applied to a layer positioned on a first side of the base layer (B) and is transferred through contact to the corresponding outer side of the film on the other side of the base layer (B) when the film is wound in a roll.

20. Method as claimed in one or more of claims 17 to 19, **characterized in that** it comprises a surface activation step of at least one of the outer sides of the film, to increase the surface energy of said side, before transfer of said silicone polymer to said side, for example a plasma, flame or corona treatment.

21. Method as claimed in one or more of claims 17 to 20, including the steps of:
- extruding a film having said multilayer structure, said silicon polymer being associated to at least the second coating layer (C);
- winding said film to form a roll;
- unwinding said film in a metallization chamber;
- metallizing said first external surface of said multilayer structure forming a metallized protective layer (A');
- rewinding the metallized film thus obtained in a roll;
- allowing said silicone polymer to migrate from the second coating layer on the metallization layer.

22. Method according to one or more of claims 17 to 21, including the step of co-extruding an intermediate joining layer (D) between said base layer (B) and at least one of said first coating layer (A) and said second coating layer (C).

## Patentansprüche

1. Mehrschichtige Folie für flexible Verpackung, die mindestens folgendes umfasst:
- eine Basisschicht (B) basierend auf Polypropylen, die eine erste Seite und eine zweite Seite aufweist;
- eine erste Beschichtungsschicht (A), die mit der ersten Seite der Basisschicht (B) verbunden ist;
- eine zweite Beschichtungsschicht (C), die mit der zweiten Seite der Basisschicht (B) verbunden ist, wobei die zweite Beschichtungsschicht eine freie äußere Oberfläche aufweist;
- eine Metallisierungsschutzschicht (A');
wobei ein Silikonpolymer mit einer Viskosität größer als 15 m²/s (15.000.000 cSt) der zweiten Beschichtungsschicht (C), verwendet als Gleitmittel zugegeben, zugegeben wird; und die Metallisierungsschutzschicht (A') auf der ersten Beschichtungsschicht (A) vorgesehen ist.

2. Mehrschichtige Folie gemäß Anspruch 1, ***dadurch gekennzeichnet,* dass** das Silikonpolymer vom Organosiloxantyp ist und ein hohes gewichtetes mittleres Molekulargewicht mit einer Viskosität von über 15 m²/s (15.000.000 cSt) aufweist.

3. Mehrschichtige Folie gemäß Anspruch 1 oder 2, ***dadurch gekennzeichnet,* dass** das Silikonpolymer ein gewichtetes mittleres Molekulargewicht größer als 300.000 (Mw) aufweist.

4. Mehrschichtige Folie gemäß einem oder mehreren der vorhergehenden Ansprüche, ***dadurch gekennzeichnet,* dass** das Silikonpolymer das einzige Gleitmittel ist oder mit einem oder mehreren weiteren Gleitmitteln kombiniert ist, in Mengen von nicht mehr als 500 ppm.

5. Mehrschichtige Folie gemäß einem oder mehreren der vorhergehenden Ansprüche, ***dadurch gekennzeichnet,* dass** das Silikonpolymer in einer Menge von zwischen 0,5 und 2,0 Gewichtsprozent bezüglich des Gewichts der ersten oder zweiten Beschichtungsschicht (A; C), zu der es zugegeben wird, vorliegt.

6. Mehrschichtige Folie gemäß einem oder mehreren der vorhergehenden Ansprüche, ***dadurch gekennzeichnet,* dass** die Metallisierungsschutzschicht (A') als eine Vakuummetallisierungsschicht gebildet ist, bevorzugt eine Dicke zwischen 100-300 (Å) aufweist und bevorzugt eine aluminiumbasierte Schicht ist.

7. Mehrschichtige Folie gemäß einem oder mehreren der vorhergehenden Ansprüche, ***dadurch gekennzeichnet,* dass** die Metallisierungsschutzschicht (A') eine optische Dichte (OD) zwischen 1 und 3 aufweist.

8. Mehrschichtige Folie gemäß einem oder mehreren der vorhergehenden Ansprüche, ***dadurch gekennzeichnet,* dass** der Grad des Gleitreibungskoeffizienten (COF) weniger als oder gleich 0,35 ist.

9. Mehrschichtige Folie gemäß einem oder mehreren der vorhergehenden Ansprüche, ***gekennzeichnet durch*** eines oder mehrere der folgenden Merkmale: die erste Beschichtungsschicht (A) weist eine Dicke zwischen 0,5 und 2 Mikrometer, bevorzugt zwischen 0,6 und 0,8 Mikrometer auf; die zweite Beschichtungsschicht (C) weist eine Dicke zwischen 0,5 und 3 Mikrometer auf und ist bevorzugt versiegelbar; die Basisschicht (B) der Folie weist eine Dicke zwischen 10 und 100 Mikrometer auf.

10. Mehrschichtige Folie gemäß einem oder mehreren der vorhergehenden Ansprüche, ***dadurch gekennzeichnet,* dass** die erste und/oder die zweite Beschichtungsschicht (A; C) aufgebaut ist aus mindestens einem der folgenden Polymere: einem Copolymer C₂-C₃, einem Copolymer C₃-C₄, einem Terpolymer C₂-C₃-C₄, einem Ethylen-Vinylalkohol-Copolymer oder Kombinationen davon.

11. Mehrschichtige Folie gemäß einem oder mehreren der vorhergehenden Ansprüche, ***dadurch gekennzeichnet,* dass** ein Antihaftmittel, wie etwa amorphes Siliziumoxid, Kalziumcarbonat, Magnesiumsilikat, Aluminiumsilikat oder vernetztes Polymethacrylat oder vernetztes Polysiloxan zumindest einer der Beschichtungsschichten (A; C) gegeben wird.

12. Mehrschichtige Folie gemäß einem oder mehreren der vorhergehenden Ansprüche, ***dadurch gekennzeichnet,* dass** weitere Produkte, welche die Adhäsion der Metallisierungsschutzschicht (A') verbessern oder welche deren Barriereleistungen verbessern, wie etwa Polyolefincopolymere, die gepfropft sind mit Maleinsäureanhydrid, Terpenharze, Kohlenwasserstoffharze, zu der ersten und/oder zweiten Beschichtungsschicht (A; C) zugegeben werden, zu der das Silikonpolymer zugegeben wird.

13. Mehrschichtige Folie gemäß einem oder mehreren der vorhergehenden Ansprüche, ***dadurch gekennzeichnet,* dass** die Basisschicht (B) aus 100% isotaktischem Polypropylen, isotaktischem Polypropylen gemischt mit isotaktischem Polypropylen mit hoher Kristallinität, isotaktischem Polypropylen mit einer bimodalen Struktur, die bis zu 1% C₂ enthalten kann, einer Mischung aus zwei isotaktischen Polypropylenen, von denen eines einen Isotaktizitätsindex unter oder gleich 2% aufweist oder einem Polypropylen mit bimodaler Verteilung der Molekulargewichte und einem Gehalt bis zu einem Maximum von 1% von Ethylen aufgebaut ist.

14. Mehrschichtige Folie gemäß einem oder mehreren der vorhergehenden Ansprüche, ***dadurch gekennzeichnet,* dass** sie aus einer Struktur A-B-C oder aus einer Struktur A-D-B-C, mit einer Zwischenverbindungsschicht (D) zwischen der ersten Beschichtungsschicht (A) und der Basisschicht (B) oder aus einer Struktur A-D-B-D-C, mit einer Verbindungsschicht zwischen der Basisschicht und der ersten Beschichtungsschicht (A) und einer Verbindungsschicht (D) zwischen der Basisschicht (B) und der zweiten Beschichtungsschicht (C) aufgebaut ist, wobei, wenn die Verbindungsschicht (D) vorhanden ist, die Verbindungsschicht bevorzugt aufgebaut ist aus einem Polyolefincopolymer, das mit Maleinsäureanhydrid gepfropft ist, und wobei hohlraumbildende Mittel, wie etwa PBT, CaCO₃, EVOH und dergleichen, zu der Basisschicht (B) und/oder der Verbindungsschicht (D), falls vorhanden, zugegeben werden.

15. Mehrschichtige Folie gemäß einem oder mehreren der vorhergehenden Ansprüche, ***dadurch gekennzeichnet,* dass** die erste und/oder zweite Beschichtungsschicht (A; C) auf welche die Metallisierungsschutzschicht (A') aufgebracht wird, vor der Abscheidung der Schutzschicht (A') mit einer Behandlung behandelt wurde, ausgewählt aus der Gruppe umfassend: eine Korona-Behandlung, bevorzugt in vollständiger Abwesenheit von O₂ und bevorzugt in Gegenwart von Gasmischungen basierend auf N₂ und CO₂; und ein gemischtes Korona-Flammen-System vor der Abscheidung der Metallisierungsschutzschicht (A').

16. Mehrschichtige Folie gemäß einem oder mehreren der vorhergehenden Ansprüche, ***dadurch gekennzeichnet,* dass** das Silikonpolymer in der Dicke der ersten und/oder zweiten Schutzschicht (A, C) vorgesehen ist.

17. Verfahren zur Herstellung einer metallisierten mehrschichtigen Kunststofffolie gemäß einem oder mehreren der vorhergehenden Ansprüche, das die folgenden Schritte umfasst:
- Extrudieren der Folie zum Herstellen der mehrschichtigen Struktur, die mindestens eine Basisschicht (B) basierend auf Polypropylen, eine erste Beschichtungsschicht (A), die mit einer ersten Seite der Basisschicht (B) verbunden ist, und eine zweite Beschichtungsschicht (C), die mit einer zweiten Seite der Basisschicht (B) verbunden ist, umfasst, wobei die erste Beschichtungsschicht (A) eine erste äußere Oberfläche der mehrschichtigen Struktur bildet und die zweite Beschichtungsschicht (C) eine zweite äußere Oberfläche der mehrschichtigen Struktur bildet;
- Metallisieren der ersten äußeren Oberfläche der mehrschichtigen Struktur unter Bildung einer metallisierten Schutzschicht (A');
- Wickeln der so erhaltenen Folie zu einer Rolle;
wobei ein Silikonpolymer mit einer Viskosität größer als 15 m²/s (15.000.000 cSt) als Gleitmittel verbunden mit der zweiten Beschichtungsschicht (C) verwendet wird.

18. Verfahren gemäß Anspruch 17, ***dadurch gekennzeichnet,* dass** das Silikonpolymer in einer polymeren Kunststoffmasse vor der Extrusion aufgebracht wird.

19. Verfahren gemäß Anspruch 17 oder 18, ***dadurch gekennzeichnet,* dass** das Silikonpolymer auf eine Schicht aufgebracht wird, die auf einer ersten Seite der Basisschicht (B) angeordnet ist, und durch Kontakt auf die entsprechende äußere Seite der Folie auf der anderen Seite der Basisschicht (B) übertragen wird, wenn die Folie zu einer Rolle gewickelt wird.

20. Verfahren gemäß einem oder mehreren der Ansprüche 17 bis 19, ***dadurch gekennzeichnet,* dass** es einen Oberflächenaktivierungsschritt von mindestens einer der äußeren Seiten der Folien umfasst, um die Oberflächenenergie der Seite zu erhöhen, vor der Übertragung des Silikonpolymers auf die Seite, zum Beispiel eine Plasma-Flammen- oder Korona-Behandlung.

21. Verfahren gemäß einem oder mehreren der Ansprüche 17 bis 20, das die folgenden Schritte umfasst:
- Extrudieren einer Folie, welche die mehrschichtige Struktur aufweist, wobei das Silikonpolymer mit mindestens der zweiten Beschichtungsschicht (C) verbunden ist;
- Wickeln der Folie zum Bilden einer Rolle;
- Abwickeln der Rolle in einer Metallisierungskammer;
- Metallisieren der ersten äußeren Oberfläche der mehrschichtigen Struktur unter Bildung einer metallisierten Schutzschicht (A');
- erneutes Wickeln der metallisierten Folie, die so erhalten wurde, zu einer Rolle;
- ermöglichen, dass das Silikonpolymer von der zweiten Beschichtungsschicht auf die Metallisierungsschicht wandert.

22. Verfahren gemäß einem oder mehreren der Ansprüche 17 bis 21, das den Schritt des Coextrudierens einer Zwischenverbindungsschicht (D) zwischen der Basisschicht (B) und mindestens einer der ersten Beschichtungsschicht (A) und der zweiten Beschichtungsschicht (C) einschließt.

## Revendications

1. Film multicouches pour emballage flexible, comprenant au moins :
- une couche de base (B) à base de polypropylène ayant un premier côté et un second côté ;
- une première couche de revêtement (A) associée au premier côté de ladite couche de base (B) ;
- une seconde couche de revêtement (C) associée au second côté de ladite couche de base (B), ladite seconde couche de revêtement ayant une surface extérieure libre ;
- une couche protectrice de métallisation (A') ;
dans lequel un polymère de silicone ayant une viscosité supérieure à 15 m²/s (15 000 000 cSt) est ajouté à ladite seconde couche de revêtement (C) est utilisé comme agent lubrifiant ; et ladite couche protectrice de métallisation (A') est ménagée sur ladite première couche de revêtement (A).

2. Film multicouches selon la revendication 1, **caractérisé en ce que** ledit polymère de silicone est du type organosiloxane et a une masse moléculaire moyenne en poids élevée avec une viscosité supérieure à 15 m²/s (15 000 000 cSt).

3. Film multicouches selon les revendications 1 ou 2, **caractérisé en ce que** ledit polymère de silicone a une masse moléculaire moyenne en poids supérieure à 300 000 (Mw).

4. Film multicouches selon une ou plusieurs des revendications précédentes, **caractérisé en ce que** ledit polymère de silicone est le seul agent lubrifiant ou est combiné avec un ou plusieurs autres agents lubrifiants, en quantités d'au plus 500 ppm.

5. Film multicouches selon une ou plusieurs des revendications précédentes, **caractérisé en ce que** ledit polymère de silicone est dans une quantité comprise entre 0,5 et 2,0 % en poids, relativement au poids de ladite première ou seconde couche de revêtement (A ; C) à laquelle il est ajouté.

6. Film multicouches selon une ou plusieurs des revendications précédentes, **caractérisé en ce que** ladite couche protectrice de métallisation (A') est formée comme une couche de métallisation sous vide, de préférence ayant une épaisseur comprise entre 100-300 (Å) et de préférence étant une couche à base d'aluminium.

7. Film multicouches selon une ou plusieurs des revendications précédentes, **caractérisé en ce que** ladite couche protectrice de métallisation (A') a une densité optique (OD) comprise entre 1 et 3.

8. Film multicouches selon une ou plusieurs des revendications précédentes, **caractérisé en ce que** le niveau du coefficient de frottement dynamique (COF) est inférieur ou égal à 0,35.

9. Film multicouches selon une ou plusieurs des revendications précédentes, **caractérisé par** une ou plusieurs des fonctions suivantes ; ladite première couche de revêtement (A) a une épaisseur comprise entre 0,5 et 2 micromètres, de préférence entre 0,6 et 0,8 micromètre ; ladite seconde couche de revêtement (C) a une épaisseur comprise entre 0,5 et 3 micromètres et est de préférence scellable ; ladite couche de base (B) dudit film a une épaisseur comprise entre 10 et 100 micromètres.

10. Film multicouches selon une ou plusieurs des revendications précédentes, **caractérisé en ce que** ladite première et/ou seconde couche de revêtement (A, C) est composée d'au moins un des polymères suivants : un copolymère C₂-C₃, un copolymère C₃-C₄, un terpolymère C₂-C₃-C₄, un copolymère éthylène-alcool vinylique ou des combinaisons correspondantes.

11. Film multicouches selon une ou plusieurs des revendications précédentes, **caractérisé en ce qu'**un agent anti-bloquant, comme de la silice amorphe, du carbonate de calcium, du silicate de magnésium, du silicate d'aluminium, ou du polyméthacrylate réticulé ou du polysiloxane réticulé est ajouté à au moins une desdites couches de revêtement (A ; C).

12. Film multicouches selon une ou plusieurs des revendications précédentes, **caractérisé en ce que** d'autres produits qui améliorent l'adhésion de ladite couche de protection de métallisation (A') ou qui améliorent les performances barrières de celle-ci comme des copolymères de polyoléfine greffés avec un anhydride maléique, des résines terpène, des résines hydrocarbures, sont ajoutés à ladite première et/ou seconde couches de revêtement (A, C) à laquelle ledit polymère de silicone est ajouté.

13. Film multicouches selon une ou plusieurs des revendications précédentes, **caractérisé en ce que** ladite couche de base (B) est composée de polypropylène isotactique à 100 %, de polypropylène isotactique mélangé avec un polypropylène isotactique ayant une cristallinité élevée, de polypropylène isotactique avec une structure bimodale pouvant contenir jusqu'à 1 % de C₂, d'un mélange de deux polypropylènes isotactiques dont l'un a un indice d'isotacticité inférieur ou égal à 2 %, ou d'un polypropylène ayant une distribution bimodale des masses moléculaires et contenant jusqu'à un maximum de 1 % d'éthylène.

14. Film multicouches selon une ou plusieurs des revendications précédentes, **caractérisé en ce qu'**il est compose d'une structure A-B-C, ou d'une structure A-D-B-C, avec une couche de jonction intermédiaire (D), entre ladite première couche de revêtement (A) et ladite couche de base (B) ou d'une structure A-D-B-D-C, avec une couche de jonction entre la couche de base et ladite première couche de revêtement (A) et une couche de jonction (D) entre ladite couche de base (B) et ladite seconde couche de revêtement (C), dans lequel si ladite couche de jonction (D) est présente, ladite couche de jonction est de préférence composée d'un copolymère de polyoléfine greffé avec de l'anhydride maléique, et dans lequel des agents de cavitation, comme le PBT, le CaCO₃, l'EVOH et similaire, sont ajoutés à ladite couche de base (B) et/ou à ladite couche de jonction (D) si elle est présente.

15. Film multicouches selon une ou plusieurs des revendications précédentes, **caractérisé en ce que** ladite première et/ou ladite seconde couche de revêtement (A, C), à laquelle ladite couche protectrice de métallisation (A') est appliquée, avant le dépôt de ladite couche de protection (A') a été traitée avec un traitement choisi dans le groupe comprenant : un traitement corona, de préférence en l'absence totale d'O₂, et de préférence en présence de mélanges de gaz à base de N₂ et de CO_{2;} et un système mixte à la flamme-couronne avant dépôt de ladite couche protectrice de métallisation (A').

16. Film multicouches selon une ou plusieurs des revendications précédentes, **caractérisé en ce que** ledit polymère de silicone est placé dans l'épaisseur de ladite première et/ou seconde couche protectrice (A, C).

17. Procédé de production d'un film plastique multicouches métallisé, selon une ou plusieurs des revendications précédentes, comprenant les étapes suivantes :
- l'extrusion du film pour produire la structure multicouches comprenant au moins une couche de base (B) à base de polypropylène, une première couche de revêtement (A) associée à un premier côté de ladite couche de base (B) et une seconde couche de revêtement (C) associée à un second côté de ladite couche de base (B), ladite première couche de revêtement (A) formant une première surface extérieure de ladite structure multicouches et ladite seconde couche de revêtement (C) formant une seconde surface extérieure de ladite structure multicouches ;
- la métallisation de ladite première surface externe de ladite structure multicouches formant une couche protectrice métallisée (A') ;
- l'enroulement du film ainsi obtenu en un rouleau ;
dans lequel un polymère de silicone ayant une viscosité supérieure à 15 m²/s (15 000 000 Cst) est utilisé comme agent lubrifiant associé à ladite seconde couche de revêtement (C).

18. Procédé selon la revendication 17, **caractérisé en ce que** ledit polymère de silicone est appliqué dans une masse plastique polymère avant l'extrusion.

19. Procédé selon la revendication 17 ou 18, **caractérisé en ce que** ledit polymère de silicone est appliqué à une couche positionnée sur un premier côté de la couche de base (B) et est trasféré par contact sur le côté extérieur correspondant du film, de l'autre côté de la couche de base (B), quand le film est enroulé en un rouleau.

20. Procédé selon une ou plusieurs des revendications 17 à 19, **caractérisé en ce qu'**il comprend une étape d'activation de surface d'au moins un des côtés extérieurs du film, pour augmenter l'énergie de surface dudit côté, avant le transfert dudit polymère de silicone audit côté, par exemple, un traitement au plasma, à la flamme ou corona.

21. Procédé selon une ou plusieurs des revendications 17 à 20, comprenant les étapes consistant à :
- extruder un film ayant ladite structure multicouches, ledit polymère de silicone étant associé à au moins la seconde couche de revêtement (C) ;
- enrouler ledit film pour former un rouleau;
- dérouler ledit film dans une chambre de métallisation ;
- métalliser ladite première surface extérieure de ladite structure multicouches format une couche protectrice de métallisation (A') ;
- ré-enrouler le film métallisé ainsi obtenu en un rouleau ;
- laisser ledit polymère de silicone migrer de la seconde couche de revêtement sur la couche de métallisation.

22. Procédé selon une ou plusieurs des revendications 17 à 21, comprenant l'étape consistant à co-extruder une couche de jonction intermédiaire (D) entre ladite couche de base (B) et au moins une parmi ladite première couche de revêtement (A) et ladite seconde couche de revêtement (C).
